# EUROPÄISCHE PATENTSCHRIFT

(11) **EP 2 420 907 B1**
(45) Veröffentlichungstag und Bekanntmachung des Hinweises auf die Patenterteilung: **02.10.2013**
(21) Anmeldenummer: 10172884.8
(22) Anmeldetag: 16.08.2010
(51) Int. Cl.: G05B 19/418

(54) **Verfahren zur Konfiguration von Feldbusteilnehmern**
Method for configuring field bus participants
Procédé de configuration d'utilisateurs de bus de terrain

(43) Veröffentlichungstag der Anmeldung: 22.02.2012
(73) Patentinhaber: Siemens Aktiengesellschaft, 80333 München (DE)
(72) Erfinder: Biehler, Georg, 90453 Nürnberg (DE)

(56) Entgegenhaltungen:
- EP-A1- 0 932 278
- EP-A1- 2 110 725
- DE-A1-102006 027 683

## Beschreibung

Die Erfindung betrifft ein Verfahren zur Konfiguration von Feldbusteilnehmern in einem Teilnetzwerk. Derartige Netzwerke und Feldbusteilnehmer werden vorzugsweise in der Prozessautomatisierung für die industrielle Automatisierung von beispielsweise Fertigungsanlagen eingesetzt. Ein bekannter Feldbus ist ein PROFINET-IO Bus, welcher auf einer Ethernettechnologie beruht. Ein derartiger PROFINET-IO Bus benötigt für die Adressierung in seinem Netzwerk, als auch in seinen Teilnetzwerken, für jeden Feldbusteilnehmer einen eindeutigen Namen und eineindeutige IP-Adresse. Hat ein Anlagenbetreiber oder Projekteur einen Anlagenaufbau aus mehreren Feldbusteilnehmern projektiert, und für diesen Anlagenaufbau ein Steuerungsprogramm geschrieben, so sind dieses Steuerungsprogramm und der Anlagenaufbau in der Regel mit eindeutigen Adressen versehen. Dieses so ausgestaltete Projekt bzw. Steuerungsprogramm kann in einem Feldbus auf Ethernettechnologie, wegen der Adressierung aber nur genau einmal eingesetzt werden. Fertigt beispielsweise ein Serienmaschinenbauer jedoch einen Maschinentyp für einen bestimmten Anlagenaufbau, von denen bei einem Endkunden beispielsweise mehrere Instanzen des gleichen Typs innerhalb eines Subnetzes eingesetzt werden sollen, so muss bei der Inbetriebnahme der Gesamtanlage vor Ort die Eindeutigkeit der Namen und IP-Adressen sichergestellt werden.

Nach heutigem Kenntnisstand wird das Sicherstellen der Eindeutigkeit der Namen und IP-Adressen dadurch gelöst, in dem ein Inbetriebnehmer der einzelnen Anlagenaufbauten bzw. Instanzen die einzelnen Feldbusteilnehmer vor Ort mit einem eindeutigen Namen versieht und das Projekt bzw. das Steuerungsprogramm, welches auf einen IO-Controller geladen wird, jeweils an die eindeutigen Namen anpasst, sowie eindeutige IP-Adressen im Projekt festlegt. Damit ergibt sich das Problem, dass der Inbetriebnehmer einen Zugriff auf das Projekt bzw. das Steuerungsprogramm haben muss und dieses vor Ort aufwändig für jeden einzelnen Anlagenaufbau modifizieren muss.

Aus der EP 2 110 725 A1 ist es bekannt einen Bezugspunkt als einen Speicherbereich in einer Schnittstelle des ersten Feldbusteilnehmers zu wählen und in diesem Speicherbereich mit einem Konfigurationstool einen Datensatz mit Daten für den Bezugsnamen und für eine Bezugsadresse zu schreiben.

Aufgabe der vorliegenden Erfindung ist es, ein Verfahren zur Konfiguration von Feldbusteilnehmern bereitzustellen, welches einen flexiblen Einsatz eines Anlagenaufbaus zulässt.

Die Aufgabe wird durch ein Verfahren mit den Merkmalen des Anspruchs 1 gelöst. Es ist dabei vorteilhaft, dass ein Anlagenaufbau aus Feldbusteilnehmern eines ersten Teilnetzwerkes gebildet wird, wobei ein erster Teilnehmer des ersten Teilnetzwerkes mit einem ablauffähigen Anwenderprogramm ausgestattet wird. Es hat sich als vorteilhaft herausgestellt, dass ein Bezugspunkt definiert wird, wobei von diesem Bezugspunkt Adressdaten für die Konfiguration der Feldbusteilnehmer abgeleitet werden.

Der Bezugspunkt wird dabei als ein Speicherbereich in einer Schnittstelle eines Kopplungselements definiert, und der erste Feldbusteilnehmer wird mit einem ersten Netzwerkanschluss an einen ersten Anschluss des Kopplungselementes angeschlossen, wobei nach dem Anschlussvorgang aus den Speicherbereich ein Datum für eine Einbauposition des ersten Anlagenaufbaus ausgelesen wird.

Dabei wird der erste Feldbusteilnehmer mit einem ersten Netzwerkanschluss an einen ersten Anschluss eines Kopplungselementes angeschlossen. Ein derartiger Anlagenaufbau erfolgt in der Regel durch die Konfiguration mit einem speziellen Konfigurationstool, wie es z.B. von der Firma Siemens unter dem Markennamen SIMATIC Step 7 bekannt ist. Für eine Konfiguration werden elektronische Datenblätter der angeschlossenen Feldbusteilnehmer, insbesondere PROFINET-IO-Geräte, benötigt. Diese elektronischen Datenblätter werden auch GSD-Dateien (Generic Station Descripton) genannt. Jedes PROFINET-IO-Gerät benötigt eine individuelle GSD-Datei, die vom jeweiligen Gerätehersteller zur Verfügung gestellt werden muss. Bei der Konfiguration des PROFINET-Netzwerkes wählt der Projekteur die in der GSD-Datei definierten Module/Submodule aus, um sie auf die reale Anlage abzubilden und den jeweiligen Einbauorten zuzuordnen.

Zur Ausführung des Verfahrens werden, vorzugsweise in dem ersten Anlagenaufbau, folgende Regeln festgelegt:
Der erste Anschluss wird als ein erster Bezugspunkt festgelegt, von dem Adressdaten für die Konfiguration der Feldbusteilnehmer in dem ersten Teilnetzwerk abgeleitet werden, für einen Teilnehmernamen und eine Adresse der Feldbusteilnehmer wird eine Einstellung gewählt, welche aussagt, dass die Adressdaten zu einem späteren Zeitpunkt zugewiesen werden, mit Ausnahme der ersten Feldbusteilnehmers sind weitere Feldbusteilnehmer in dem ersten Anlagenaufbau vorläufig als deaktiviert eingestellt. In dem Anwenderprogramm des ersten Feldbusteilnehmers wird folgender Ablauf abgearbeitet:
   Einlesen über den ersten Netzwerkanschluss eines Datensatzes des ersten Anschlusses des Kopplungselementes in einer Schnittstelle oder des Speicherbereiches des ersten Feldbusteilnehmers, wobei durch den Datensatz eine Bezugsnahme und eine Bezugsadresse ermittelt wird, ableiten der Teilnehmernamen und der Adressen für die Feldbusteilnehmer, Aufruf einer Systemfunktion im Anwenderprogramm, welche die abgeleiteten Namen und Adressen in eine Konfigurationsdatei schreibt, alle zuvor deaktivierten Feldbusteilnehmer werden nun wieder aktiviert. Zur Konfiguration gehört die Festlegung der Teilnehmernamen und der Adressen, nämlich den Netzwerk-IP's. Dabei wird jedem Feldgerät ein logischer Name zugeordnet, der einen Bezug zur Funktion in der Anlage oder zum Einbauort haben sollte und schließlich bei der Adressauflösung zur Zuteilung einer IP-Adresse führt. Diese Zuteilung der IP-Adresse ist aber gerade so eingestellt, dass die Adressdaten erst zu einem späteren Zeitpunkt zugewiesen werden. Diese Einstellung entspräche beispielsweise einer Einstellungsart wie in einem folgenden Parametersatz; Name of Station "vor Ort vergeben".
   Das bedeutet, dass der Name der Station dynamisch vergeben wird.

Durch das Einlesen des ersten Datensatzes, wobei durch den Datensatz ein Bezugsname und eine Bezugsadresse ermittelt werden, können eindeutige Teilnehmernamen und Teilnehmeradressen für die Feldbusteilnehmer abgeleitet werden.

Nach dem eine PROFINET-Konfiguration beendet ist, lädt ein Projekteur normalerweise die Konfigurationsdaten in den IO-Controller. Damit hat der IO-Controller alle Informationen für die Adressierung der IO-Devices und zur Durchführung des Datenaustausches. Nach dem erfolgreichen Download beginnt der IO-Controller mit dem Hochlauf des PROFINET-IO Netzwerkes.

Nach dem Verfahren ist ein Download durch den Projekteur vorteilhafter Weise nicht mehr notwendig, da ein Aufruf einer Systemfunktion im Anwenderprogramm, welche die abgeleiteten Namen und Adressen in eine Konfigurationsdatei schreibt, diesen zuvor manuell ausgeführten Schritt ersetzt. Nach dem Schreiben in die Konfigurationsdatei werden alle zuvor deaktivierten Feldbusteilnehmer aktiviert.

Bei dem Verfahren hat es sich als vorteilhaft erwiesen, dass der erste Feldbusteilnehmer als ein Automatisierungsgerät mit einer speicherprogrammierbaren Steuerung betrieben wird und in ihm ein Programm gespeichert wird, welches eine Anlage steuert. Derartige Feldbusteilnehmer werden als eine intelligente dezentrale Peripherie bezeichnet. An solche Feldbusteilnehmer sind in der Regel Ein-/Ausgabebaugruppen angeschlossen, welche aus dem Prozess Signale aufnehmen und abgeben können, dabei hat der Feldbusteilnehmer eine eigene CPU um Steuerungsaufgaben zu übernehmen.

Der erste Anlagenaufbau, welcher mehrere Feldbusteilnehmer enthält ist dabei vorzugsweise an das Kopplungselement angeschlossen, dieses Kopplungselement bildet einen Topologieanker für die Topologie der Teilnetzwerke. Das Kopplungselement kann eine Mehrzahl von Schnittstellen aufweisen, wobei jeder Schnittstelle ein eindeutiges Datum für eine eindeutige Einbauposition zugewiesen wird.

Bei der zuvor genannten Regelfestlegung ist es weiterhin von Vorteil, wenn ein Namensraum und ein Adressband, insbesondere für ein auf ein Ethernet-TCP/IP basierendes Feldbusnetzwerk, zuvor festgelegt wird. Solch ein Namensraum kann beispielsweise aus einem Bezeichner "_001", welcher den ersten Anlagenaufbau symbolisiert, bestehen. Dabei wird der Bezeichner "_001" zur Bildung von eindeutigen Namen einfach an bereits existierenden Namen wie CPU, Funktionsgerät, ET200 oder dergleichen, angehängt. Eine eindeutige Namensvergabe ist somit gewährleistet. Ein Adressband, insbesondere ein IP-Band kann beispielsweise aus den ersten acht Stellen einer IP-Adresse bestehen. Ein IP-Band von "142.160.2.1X" wäre also denkbar, wobei für das X eine beliebige Zahl von Null bis Neun eingesetzt wird und je nach Anzahl von Feldbusteilnehmern hochgezählt werden kann.

In einer weiteren Ausgestaltung ist es vorteilhaft, wenn bei einem Systemhochlauf des ersten Feldbusteilnehmers in diesem geprüft wird, an welchem Anschluss des Kopplungselementes er mit seinem ersten Netzwerkanschluss angeschlossen ist. Hat ein Kopplungselement, beispielsweise ein Switch, mehrere Ports, so sind diese in einem einfachen Fall durchnummeriert, wie z.B. Port-001, Port-002, Port-003 usw.. Diesen durchnummerierten Port-Namen, wie Switchl.Port-001, kann ein Anwenderprogramm in dem ersten Feldbusteilnehmer nach seinem Systemhochlauf über seinen ersten Netzwerkanschluss von dem Kopplungselement, also von dem Switch abfragen und mit diesem Abfragewert kann das Anwenderprogramm dementsprechend weiterarbeiten. Dies könnte beispielsweise mit einem LLDP (List Layer Discovery Protocol) erfolgen.

Diese Abfrage wird vorzugsweise als eine Abfrage eines Datensatzes ausgeführt, wobei aus dem Datensatz des ersten Anschlusses eine Kenngröße entnommen wird und aus dieser Kenngröße und dem Namenraum ein eindeutiger Teilnehmername für einen Feldbusteilnehmer abgeleitet wird, sowie aus der Kenngröße und dem Adressband eine eindeutige Teilnehmeradresse abgeleitet wird. Aus dem Datensatz kann prinzipiell eine beliebige Kenngröße entnommen werden, welche es erlaubt, eine eindeutige Bildung von Teilnehmername und Teilnehmeradresse abzuleiten. Dies kann beispielsweise die Port-Nummer "Port_001" eines ersten Switch sein, also Switchl.Port_001 = "Port_001".

Vorzugsweise wird das Programm für einen Maschinentyp ausgelegt und der erste Anlagenaufbau für diesen Maschinentyp ebenfalls ausgelegt, wobei das Programm für weitere Anlagenaufbauten eingesetzt wird, in welchen der gleiche Maschinentyp verwendet wird. Mit dem genannten Verfahren kann dann das einmal für einen Maschinentyp ausgelegte Programm während des Hochlaufes der einzelnen Feldgeräte dynamisch auf eindeutige Teilnehmernamen und Adressen angepasst werden ohne das ein Inbetriebsetzer manuell durch den Anschluss eines Programmiergerätes die entsprechenden Teilnehmernamen und Adressen anpassen muss.

Dabei hat es sich als vorteilhaft herausgestellt, dass die weiteren Anlagenaufbauten an das Kopplungselement angeschlossen werden und sich nach Durchführung nach einem der vorangegangenen Schritte für jeden Feldbusteilnehmer eine eindeutige Adresse und ein eindeutiger Teilnehmername ergibt, wonach die Anlagenaufbauten ihren Anlagenbetrieb störungsfrei aufnehmen können.

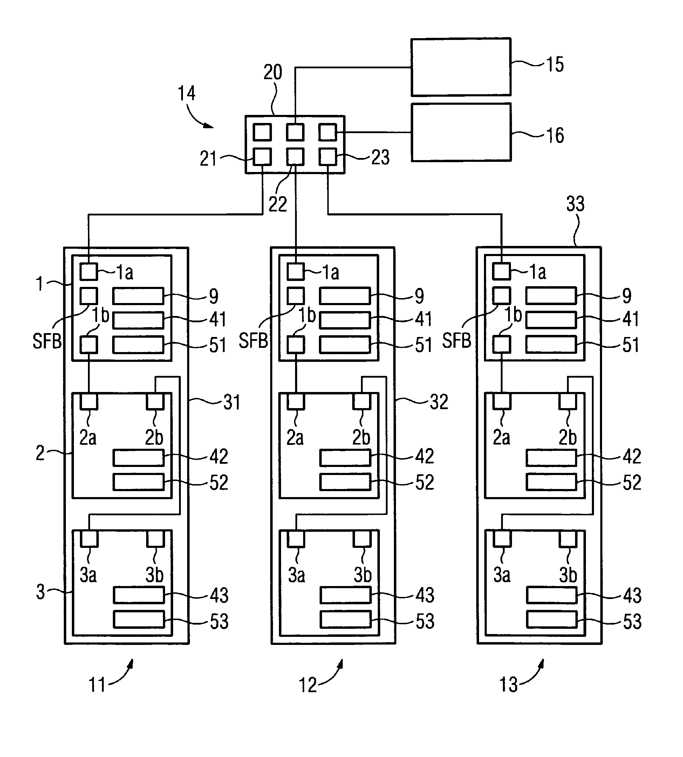

Gemäß der Figur wird ein Ausführungsbeispiel vorgestellt und weitere vorteilhafte Merkmale der Erfindung aufgezeigt.

Gemäß der Figur ist schematisch eine industrielle Anlage mit einem ersten Anlagenaufbau 31, einem zweiten Anlagenaufbau 32 und einem dritten Anlagenaufbau 33 dargestellt. Die Anlagenaufbauten 31,32,33 sind über ein übergeordnetes Netzwerk 14 mit einem Kopplungselement 20 an eine Hauptsteuerung 15 und an ein Programmiergerät 16 angeschlossen. Das Kopplungselement 20 weist neben den Anschlüssen für die Hauptsteuerung 15 und das Programmiergerät 16 einen ersten Anschluss 21, an welchen über eine Feldbusleitung der erste Anlagenaufbau 31 angeschlossen ist, einen zweiten Anschluss 22, an welchen der zweite Anlagenaufbau 32 über eine Feldbusleitung angeschlossen ist und einen dritten Anschluss 23 an dem der dritte Anlagenaufbau 33 ebenfalls über eine Feldbusleitung angeschlossen ist. Die Feldbusleitungen sind hier im Beispiel als ein Industrial Ethernet, PROFINET-IO ausgelegt. Die einzelnen Anlagenaufbauten 31,32,33 sind mit ihren Feldgeräten 1,2,3 jeweils für einen bestimmten Maschinentyp ausgelegt. Dabei weist beispielsweise der erste Anlagenaufbau 31 einen ersten Feldbusteilnehmer 1, einen zweiten Feldbusteilnehmer 2 und einen dritten Feldbusteilnehmer 3 auf. Der Aufbau des ersten Anlagenaufbaus 31 gilt entsprechend für die Anlagenaufbauten 32,33 und sei hier nur am Beispiel des ersten Anlagenaufbaus 31 erläutert. Die Feldbusteilnehmer 1,2,3 sind ebenfalls über Feldbusleitungen vernetzt und bilden somit ein erstes Teilnetzwerk 11. Der erste Feldbusteilnehmer 1 ist über einen ihm zugeordneten ersten Netzwerkanschluss 1a mit dem ersten Anschluss 21 des Kopplungselementes 20 verbunden. Als ein besonderer Feldbusteilnehmer ist der erste Feldbusteilnehmer 1 als eine sogenannte intelligente dezentrale Peripherie mit einer eingebauten speicherprogrammierbaren Steuerung und somit einer CPU ausgelegt. Ein Anwenderprogramm 9 ist somit in dem ersten Feldbusteilnehmer 1 ablauffähig und kann Steuerungsaufgaben übernehmen. Über einen zweiten Netzwerkanschluss 1b ist der erste Feldbusteilnehmer 1 an dem zweiten Feldbusteilnehmer 2 angeschlossen, wobei dieser für sich betrachtet ebenfalls einen ersten Netzwerkanschluss 2a und einen zweiten Netzwerkanschluss 2b bereitstellt. Über den zweiten Netzwerkanschluss 2b des zweiten Netzwerkteilnehmers 2 ist ein dritter Netzwerkteilnehmer 3, ebenfalls an seinem ersten Netzwerkanschluss 3a angeschlossen. Ein zweiter Netzwerkanschluss 3b des dritten Netzwerkteilnehmers 3 bleibt frei.

Für eine spätere Vergabe eines eindeutigen Teilnehmernamens und einer Adresse für die Netzwerkteilnehmer 1,2,3 wird der erste Anschluss 21 als ein erster Bezugspunkt festgelegt von dem Adressdaten für die Konfiguration der Feldbusteilnehmer 1,2,3 in dem ersten Teilnetzwerk 11 abgeleitet werden. Dabei wird in einem Verfahrensschritt für einen ersten Teilnehmernamen 41 und eine erste Adresse 51 des ersten Feldbusteilnehmers 1 eine Einstellung gewählt, welche aussagt, dass die Adressdaten zu einem späteren Zeitpunkt zugewiesen werden. Eine derartige Einstellung ist beispielsweise mittels eines Konfigurationstools möglich. Eine mögliche Einstellung wäre dann für den ersten Feldbusteilnehmer 1 mit einer CPU: NameofStation = "vor Ort vergeben" und IP-Suite entspricht ebenfalls "vor Ort vergeben". Die Einstellung, gilt auch für den zweiten Feldbusteilnehmer 2 und den dritten Feldbusteilnehmer 3.

Weiterhin werden mit Ausnahme des ersten Feldbusteilnehmers 1 die weiteren Feldbusteilnehmer 2,3 vorläufig als deaktiviert eingestellt.

Um nun mit einer Namens- und Adressvergabe für die Feldbusteilnehmer 1,2,3 zu beginnen, wird in dem Anwenderprogramm 9 folgender Ablauf abgearbeitet; über den ersten Netzwerkanschluss 1a des ersten Netzwerkteilnehmers 1 wird ein Datensatz des ersten Anschlusses 21 des Kopplungselementes 20 eingelesen, wobei durch den Datensatz ein Bezugsname und eine Bezugsadresse ermittelt werden. Das Kopplungselement 20, welches als ein Switch ausgelegt ist und als ein Topologieanker fungiert, könnte für seine Anschlüsse 21,22,23 beispielsweise die Namen "Port_001, Port_002, Port_003" besitzen. Aus diesen Kenngrößen des Kopplungselementes 20 können eindeutige Teilnehmernamen und Adressen für die Feldbusteilnehmer 1,2,3 abgeleitet werden. Sind diese Namen und Adressen innerhalb des Anwenderprogramms 9, also in einer Runtime-Funktionalität in der CPU, bereitgestellt worden, beispielsweise durch String-Operationen, so kann weiterhin innerhalb des Anwenderprogramms 9 ein Aufruf einer Systemfunktion SFB durchgeführt werden, diese Systemfunktion SFB schreibt die abgeleiteten Namen und Adressen in eine Konfigurationsdatei. Nach Abschluss der Systemfunktion SFB werden alle zuvor deaktivierten Feldbusteilnehmer wieder aktiviert. Die Systemfunktion SFB hat beispielsweise die Adressdaten in die entsprechenden IO-Controller der entsprechenden Feldbusteilnehmer geschrieben, wodurch ein Hochlauf des ersten Anlagenaufbaus 31 durchgeführt werden kann.

Ausgehend davon, dass die Anlagenaufbauten 31,32,33 identisch aufgebaut sind und der jeweils erste Feldbusteilnehmer 1 eine speicherprogrammierbare Steuerung mit einer CPU bildet, bildet jede CPU eine Maschineninstanz gleichen Typs. Für jede CPU ist dabei ein gleiches Automatisierungsprojekt abgespeichert. In dem Automatisierungsprojekt sind die Parameter Name of Station und die IP-Seite auf "vor Ort vergeben" eingestellt.

Den Topologieanker in diesem Verbundsystem bildet der Switch. Der Anwender hat zuvor festgelegt, dass die einzelne Maschineninstanz den Namensraum abhängig von der Portnummer des Switches bekommt, d.h. die Maschine an "Port 001" erhält den Namensraum "_001", die am Port_002 den Namensraum " 002" usw.. Weiterhin ist es vorteilhaft, dass die Maschineninstanz an Port_001 IP-Adressen haben, die mit "1X" enden, die am Port_002 die IP-Adressen, die mit "2X" enden usw..

Läuft eine CPU an, so prüft sie, an welchem Port des Topologieankers sie angeschlossen ist. Nach Abfrage einer Kenngröße von dem Topologieanker z.B. "Port_003.Switch", kann das Anwenderprogramm in der CPU daraus ableiten, dass hier der Namensraum "_003" und der IP-Adressbereich "3X" zugeordnet werden. Damit kann die CPU mit Hilfe des Anwenderprogramms 9 und der Systemfunktion SFB die Konfigurationsdatei füllen. Die Konfigurationsdatei ist dabei beispielsweise als ein IP-Konfigurationsdatensatz ausgestaltet. In diesem IP-Konfigurationsdatensatz werden folgende Werte eingetragen.
- Für die CPU: NameofStation = CPU_003, IP = 142.160.2.30
- Für die IO Devices:
- NameofStation = FR_003, IP = 142.160.2.31, StationNameAlias=port-002.CPU_003
- NameofStation = ET200_003, IP = 142.160.2.32, StationNameAlias=port-002.FU_003

Nach dem Aufruf der Systemfunktion SFB werden die zuvor genannten Werte in ein Interface einer jeden CPU direkt eingetragen und die Werte für die IO_Devices in eine Datenbank des IO-Controllers eingetragen. Nach dem ein Anwender anschließend die IO-Devices, also die Feldbusteilnehmer, aktiviert, erfolgt ein Suchen nach dem Namen und auch nach dem StationNameAlias. Wird ein StationNameAlias mit einem unterschiedlichen oder aber nicht gesetzten NameofStation gefunden, so folgt ein Setzen des NameofStations über die Mechanismen des Gerätetausches ohne PG, d.h. anhand der Topologie. Zu den Mechanismen des Gerätetausches ohne PG wird für die Ausführbarkeit des Ausführungsbeispiels auf die europäische Patentanmeldung EP 2 110 725 A1 verwiesen, welche das Veröffentlichungsdatum 21.10.2009 trägt. Der NameofStation wird für den ersten Feldbusteilnehmer 1 in das Feld erster Teilnehmer 41 und die IP-Stationsadresse wird in das Feld erste Adresse 51 des ersten Feldbusteilnehmers 1 eingetragen. Für die übrigen Feldbusteilnehmer gilt ein analoges Eintragen von Name und Adresse.

Mit der Erfindung kann ein Maschinentyp mit einem gemeinsamen Projekt mehrfach in einer Anlage instanziiert werden und sich an die Umgebung adaptieren. Dies kann über eine Individualisierung der CPU selbst oder über Berücksichtigung einer Einbauposition erfolgen.

Bei der Berücksichtigung einer Einbauposition ist der Bezugspunkt als ein Speicherbereich in einer Schnittstelle eines Kopplungselementes definieret, wobei der erste Feldbusteilnehmer, also die CPU mit einem ersten Netzwerkanschluss, üblicherweise ihre Schnittstelle für den Feldbus, an einen ersten Anschluss des Kopplungselementes angeschlossen wird. Nach dem Anschlussvorgang wird aus dem Speicherbereich des Kopplungselementes, üblicherweise ein Switch, ein Datum für eine Einbauposition des ersten Anlagenaufbaus ausgelesen. Stelle man sich unterschiedliche Anlagenaufbauten als mobile Aggregate vor, welche beispielsweise in einem Druckmaschinenbereich an die entsprechenden Druckmaschinen angeschoben und angedockt werden können. Dies wird in der Druckindustrie beispielsweise benötigt um unterschiedliche Zeitungen mit unterschiedlichen Prospekt- bzw. Werbematerial oder zusätzlichen CDs zu versorgen.

Wird demnach in einem Druckprozess ein mobiler Anlagenaufbau an eine gewisse Position in den Druckmaschinenprozess geschoben und an ein Kopplungselement angedockt, so wird dieser Anlagenaufbau "aufgeweckt". Bildlich gesprochen kann man sagen der Anlagenaufbau wird mit Strom versorgt, erwacht und fragt sich "wo bin ich aufgewacht". Bei dieser Aufwachphase wird aufgrund des erfindungsgemäßen Verfahrens der Bezugspunkt in dem Kopplungselement abgefragt und demnach wird mit dem Datum aus dem Bezugspunkt verfahrensgemäß vorgegangen und der Anlagenaufbau für diese spezielle Druckmaschinenstation konfiguriert.

Es ergeben sich damit die Vorteile, dass ein Spezialmaschinenbauer Maschinentypen bauen kann, die durch einen Inbetriebnehmer ohne Zuhilfenahme des Projektes individualisiert eingesetzt werden können, sich dabei aber selbständig über das Anwenderprogramm 9 adressieren.

## Patentansprüche

1. Verfahren zur Konfiguration von Feldbusteilnehmern (1,2,3) in einem Teilnetzwerk (11,12,13), mit den Schritten:
- bilden eines ersten Anlagenaufbaus (31) aus den Feldbusteilnehmern eines ersten Teilnetzwerkes (11),
- ein erster Feldbusteilnehmer (1) des ersten Teilnetzwerkes (11) wird mit einem ablauffähigem Anwenderprogramm (9) versehen,
- in dem ersten Anlagenaufbau (31) werden folgende Regeln festgelegt:
i) Definition eines Bezugspunktes, von welchem Adressdaten für die Konfiguration der Feldbusteilnehmer (1,2,3) in dem ersten Teilnetzwerkes (11) abgeleitet werden,
ii) für einen Teilnehmernamen (41, 42, 43) und eine Adresse (51, 52, 53) der Feldbusteilnehmer (1,2,3) wird eine Einstellung gewählt, welche aussagt, dass die Adressdaten zu einem späteren Zeitpunkt zugewiesen werden,
iii) mit Ausnahme des ersten Feldbusteilnehmers (1) sind weitere Feldbusteilnehmer (2,3) vorläufig als deaktiviert eingestellt,
- der erste Feldbusteilnehmer (1) wird gestartet und das Anwenderprogramm (9) wird ausgeführt,
- in dem Anwenderprogramm (9) wird folgender Ablauf abgearbeitet:
iv) Einlesen eines Datensatzes von dem Bezugspunkt, wobei durch den Datensatz ein Bezugsname und eine Bezugsadresse ermittelt werden wobei der Bezugspunkt als ein Speicherbereich in einer Schnittstelle eines Kopplungselements (20) definiert wird, und der erste Feldbusteilnehmer (1) mit einem ersten Netzwerkanschluss (la) an einen ersten Anschluss (21) des Kopplungselementes (20) angeschlossen wird, wobei nach dem Anschlussvorgang aus dem Speicherbereich ein Datum für eine Einbauposition des ersten Anlagenaufbaus (31) ausgelesen wird,
v) Ableiten der Teilnehmernamen (41, 42, 43) und der Teilnehmeradressen (51, 52, 53) für die Feldbusteilnehmer (1,2,3) von dem Bezugsnamen und der Bezugsadresse,
vi) Aufruf einer Systemfunktion (SFB) im Anwenderprogramm (9), welche die abgeleiteten Teilnehmernamen und Teilnehmeradressen in eine Konfigurationsdatei und in ein Interface des ersten Feldbusteilnehmers (1) schreibt,
vii) alle zuvor deaktivierten Feldbusteilnehmer (2,3) aktivieren.

2. Verfahren nach Anspruch 1, wobei der erste Feldbusteilnehmer (1) als ein Automatisierungsgerät mit einer Speicher Programmierbaren Steuerung betrieben wird und in ihm ein Programm gespeichert wird, welches eine Anlage steuert.

3. Verfahren nach Anspruch 1 oder 2, wobei durch das Kopplungselement (20) ein Topologieanker für die Topologie des ersten Teilnetzwerkes (11) und weiterer Teilnetzwerke (12, 13) gebildet wird, wobei das Kopplungselement (20) eine Mehrzahl von Schnittstellen aufweist, wobei jeder Schnittstelle ein eindeutiges Datum für eine eindeutige Einbauposition zugewiesen wird.

4. Verfahren nach Anspruch 2, wobei das Programm für einen Maschinentyp ausgelegt wird und der erste Anlagenaufbau (31) für diesen Maschinentyp ausgelegt ist, wobei das Programm für weitere Anlagenaufbauten (32,33) eingesetzt wird, in welchen der gleiche Maschinentyp verwendet wird.

5. Verfahren nach Anspruch 4, wobei die weiteren Anlagenaufbauten an das Kopplungselement angeschlossen werden und sich nach Durchführung nach einem der vorangegangenen Schritte für die Feldbusteilnehmer eine eindeutige Adresse und ein eindeutiger Teilnehmername ergibt, wonach die Anlagenaufbauten ichren Anlagenbetrieb aufnehmen.

## Claims

1. Method for configuring fieldbus stations (1, 2, 3) in a subnetwork (11, 12, 13), having the steps:
- formation of a first system set-up (31) from the fieldbus stations of a first subnetwork (11),
- a first fieldbus station (1) of the first subnetwork (11) is provided with an executable user program (9),
- in the first system set-up (31) the following rules are established:
i) definition of a reference point from which address data for configuring the fieldbus stations (1, 2, 3) in the first subnetwork (11) is derived,
ii) for a station name (41, 42, 43) and an address (51, 52, 53) of the fieldbus stations (1,2,3) a setting is chosen which shows that the address data will be assigned at a later point in time,
iii) with the exception of the first fieldbus station (1) further fieldbus stations (2, 3) are temporarily set as deactivated,
- the first fieldbus station (1) is started up and the user program (9) is executed,
- the following sequence is executed in the user program (9):
iv) reading in a data record from the reference point, wherein a reference name and a reference address are determined by the data record, wherein the reference point is defined as a storage area in an interface of a coupling element (20), and the first fieldbus station (1) is connected using a first network port (1a) to a first port (21) of the coupling element (20), wherein following the connection procedure an item of data for a mounting position of the first system set-up (31) is read out from the storage area,
v) deriving the station names (41, 42, 43) and the station addresses (51, 52, 53) for the fieldbus stations (1, 2, 3) from the reference name and the reference address,
vi) invoking a system function (SFB) in the user program (9) which writes the derived station names and station addresses to a configuration file and to an interface of the first fieldbus station (1),
vii) activating all previously deactivated fieldbus stations (2, 3).

2. Method according to claim 1, wherein the first fieldbus station (1) is operated as an automation device with a programmable logic controller, and a program is stored in it which controls a system.

3. Method according to claim 1 or 2, wherein a topology anchor for the topology of the first subnetwork (11) and further subnetworks (12, 13) is formed by the coupling element (20), wherein the coupling element (20) has a plurality of interfaces, wherein each interface is assigned a unique item of data for a unique mounting position.

4. Method according to claim 2, wherein the program is configured for a machine type and the first system set-up (31) is configured for this machine type, wherein the program is used for further system set-ups (32, 33) in which the identical machine type is used.

5. Method according to claim 4, wherein the further system set-ups are connected to the coupling element and after execution in accordance with one of the preceding steps a unique address and a unique station name are produced for the fieldbus stations, after which the system set-ups commence their system operation.

## Revendications

1. Procédé de configuration d'utilisateurs ( 1, 2, 3 ) de bus de terrain dans un sous-réseau ( 11, 12, 13 ) comprenant les stades dans lesquels :
- on forme une première structure ( 31 ) de système composée des utilisateurs de bus de terrain d'un premier sous-réseau ( 11 ),
- on munit un premier utilisateur ( 1 ) de bus de terrain du premier sous-réseau (11) d'un programme ( 9 ) utilisateur susceptible de se dérouler,
- dans la première structure ( 31 ) de système, on fixe les règles suivantes :
i). définition d'un point de référence duquel on déduit des données d'adresse pour la configuration des utilisateurs ( 1, 2, 3 ) du bus de terrain dans le premier sous-réseau ( 11 ),
ii). on choisit, pour un nom ( 41, 42, 43 ) d'utilisateur et pour une adresse ( 51, 52, 53 ) de l'utilisateur ( 1, 2, 3 ) de bus de terrain, un réglage qui prédit que les données d'adresse sont affectées à un instant ultérieur,
iii). à l'exception du premier utilisateur ( 1 ) de bus de terrain, on règle, comme désactivés provisoirement, les autres utilisateurs ( 2, 3 ) de bus de terrain,
- on fait débuter le premier utilisateur ( 1 ) de bus de terrain et on réalise le programme ( 9 ) utilisateur,
- dans le programme ( 9 ) utilisateur, on effectue le déroulement suivant :
iv). on lit un jeu de données à partir du point de référence, un nom de référence et une adresse de référence étant déterminés par le jeu de données, le point de référence étant défini comme une partie de mémoire dans une interface d'un élément ( 20 ) de couplage et le premier utilisateur ( 1 ) de bus de terrain étant relié par une première connexion ( 1a ) de réseau à une première connexion ( 21 ) de l'élément ( 20 ) de couplage, dans lequel, après l'opération de connexion, on lit, dans la partie de mémoire, une donnée pour une position de montage de la première structure ( 31 ) de système,
v). on déduit des noms ( 41, 42, 43 ) d'utilisateurs et des adresses ( 51, 52, 53 ) d'utilisateurs pour les utilisateurs ( 1, 2, 3 ) de bus de terrain à partir du nom de référence et de l'adresse de référence,
vi). on appelle une fonction ( SFB ) de système dans le programme ( 9 ) utilisateur, fonction qui décrit les noms déduits d'utilisateurs et les adresses déduites d'utilisateurs dans un fichier de configuration et dans une interface du premier utilisateur ( 1 ) de bus de terrain,
vii). on active tous les utilisateurs ( 2, 3 ) de bus de terrain désactivés auparavant.

2. Procédé suivant la revendication 1,
dans lequel on fait fonctionner le premier utilisateur ( 1 ) de bus de terrain comme un appareil d'automatisation ayant une commande pouvant être programmée par une mémoire et on y mémorise un programme qui commande un système.

3. Procédé suivant l'une des revendications 1 ou 2,
dans lequel, par l'élément ( 20 ) de couplage, on forme un ancrage topologique pour la topologie du premier sous-réseau ( 11 ) et pour d'autres sous-réseau ( 12, 13 ), l'élément ( 20 ) de couplage ayant une pluralité d'interfaces, une donnée univoque pour une position de montage univoque étant affectée à chaque interface.

4. Procédé suivant la revendication 2,
dans lequel on conçoit le programme pour un type de machine et on conçoit la première structure ( 31 ) de système pour ce type de machine, le programme étant utilisé pour d'autres superstructures ( 32, 33 ) de système, dans lequel on utilise le même type de machine.

5. Procédé suivant la revendication 4,
dans lequel on raccord les autres superstructures de système à l'élément de couplage et on obtient, après être passé par l'un des stades précédents, pour les utilisateurs de bus de terrain, une adresse univoque et un nom d'utilisateur univoque suivant lesquels les superstructures du système prennent leur fonctionnement dans le système.
